# EUROPEAN PATENT SPECIFICATION

(11) **EP 3 282 295 B1**
(45) Date of publication and mention of the grant of the patent: **04.05.2022**
(21) Application number: 16776359.8
(22) Date of filing: 07.03.2016
(51) Int. Cl.: G02B 6/44

(54) **LOOSE TUBE, LOOSE TUBE TYPE OPTICAL FIBER CABLE, SINGLE FIBER ISOLATION METHOD FOR LOOSE TUBE OPTICAL FIBER TAPE, LOOSE TUBE MANUFACTURING METHOD, AND METHOD FOR GATHERING TOGETHER A PLURALITY OF OPTICAL FIBERS**
BÜNDELADER, FASEROPTISCHES BÜNDELADERKABEL, EINZELFASERISOLATIONSVERFAHREN FÜR FASEROPTISCHES BÜNDELADERBAND, HERSTELLUNGSVERFAHREN FÜR BÜNDELADER UND VERFAHREN ZUR BÜNDELUNG VON MEHREREN OPTISCHEN FASERN
GAINE INTERMÉDIAIRE FLOTTANTE, CÂBLE À FIBRE OPTIQUE DE TYPE À GAINE INTERMÉDIAIRE FLOTTANTE, PROCÉDÉ D'ISOLATION DE FIBRE UNIQUE POUR RUBAN DE FIBRES OPTIQUES À GAINE INTERMÉDIAIRE FLOTTANTE, PROCÉDÉ DE FABRICATION DE GAINE INTERMÉDIAIRE FLOTTANTE, ET PROCÉDÉ POUR ASSEMBLER UNE PLURALITÉ DE FIBRES OPTIQUES

(30) Priority: 07.04.2015 JP 2015078326
(43) Date of publication of application: 14.02.2018
(73) Proprietor: Fujikura Ltd., Tokyo 135-8512 (JP)
(72) Inventor: TAKEDA, Daiki, Sakura-shi Chiba 285-8550 (JP); OKADA, Naoki, Sakura-shi Chiba 285-8550 (JP); YAMANAKA, Masayoshi, Sakura-shi Chiba 285-8550 (JP); OSATO, Ken, Sakura-shi Chiba 285-8550 (JP); ISAJI, Mizuki, Sakura-shi Chiba 285-8550 (JP)
(74) Representative: Keenway Patentanwälte Neumann Heine Taruttis
(86) International application number: PCT/JP2016/056990
(87) International publication number: WO 2016/163190

(56) References cited:
- WO-A1-2013/065640
- WO-A1-2013/165407
- WO-A1-2014/054129
- JP-A- H01 271 714
- JP-A- 2000 241 682
- JP-A- 2005 234 031
- JP-A- 2009 116 240
- JP-A- 2012 083 418
- JP-A- 2014 115 312
- JP-A- 2014 202 795
- JP-A- 2014 211 526

## Description

The invention relates to a loose tube according to the preamble of claim 1, a loose-tube-type optical fiber cable according to the preamble of claim 9, a method for manufacturing a loose tube according to the preamble of claim 10, and a method for gathering a plurality of optical fibers according to the preamble of claim 11.

Japanese Patent No.5260940 (Patent Literature 1) discloses a loose-tube-type optical fiber cable in which a plurality of loose tubes are arranged around a tension member. Each loose tube has a structure wherein a plurality of optical fibers and a gel (resin filler material) are housed inside a tube. When extruding the loose tube, the plurality of optical fibers and the gel are introduced into an interior space of a molten tube material. The presence of the gel around the optical fibers inhibits the optical fibers from contacting the molten tube material.

JP 2012-173603 A (Patent Literature 2) and JP 2007-178883 A (Patent Literature 3) each disclose a ribbon of optical fibers (referred to hereinafter simply as "optical fiber ribbon") that has an identification mark formed thereon. The optical fiber ribbon disclosed in Patent Literature 2 and Patent Literature 3 is configured in a ribbon (tape) form in which a plurality of optical fibers arranged side by side in a row are covered all together with a resin.

An individual optical fiber is thinner than an optical fiber ribbon. Thus, in cases where a plurality of optical fibers in a loose tube are all individual optical fibers, the identification mark formed on each individual optical fiber may be difficult to visually recognize.

In cases where a plurality of optical fibers in a loose tube are constituted by an optical fiber ribbon as disclosed in Patent Literatures 2 and 3, the identification mark formed on the optical fiber ribbon may be easy to visually recognize. However, in cases where the optical fiber ribbon of Patent Literatures 2 and 3--i.e., an optical fiber ribbon in which a plurality of optical fibers arranged side by side in a row are covered all together with a resin--is arranged inside a loose tube without using a wrapping tape, the optical fiber ribbon may come into contact with a molten tube material during extrusion of the loose tube, because the optical fiber ribbon is wide. Further, in arranging an optical fiber ribbon inside a loose tube without using a wrapping tape, if the optical fiber ribbon is separated in distance from the molten tube material in order to prevent contact therebetween, the loose tube will be increased in diameter due to the large pitch diameter of the plurality of optical fibers.

A loose tube according to the preamble of claim 1, a loose-tube-type optical fiber cable according to the preamble of claim 9, a method for manufacturing a loose tube according to the preamble of claim 10, and a method for gathering a plurality of optical fibers according to the preamble of claim 11 are known from WO 2013/165407. When the fiber ribbon is rolled up as described and shown in WO 2013/165407 the plurality of optical fibers is formed into a spiral shape such that the optical fiber at one end of the fiber ribbon is disposed at the inner side of the spiral, whereas the optical fiber at the other end of the fiber ribbon is disposed at the outer side of the spiral. In cases where the fiber ribbon is first rolled up and then twined helically or in an S-Z configuration as proposed by WO 2013/165407, the length of the optical fiber on the outer side becomes long, whereas the length of the optical fiber on the inner side stays short.

According to one aspect of the invention there is provided a loose tube as defined in the preamble of claim 1, the loose tube being characterized by the features recited in the characterizing part of claim 1.

According to another aspect of the invention there is provided a lose-tube-type optical fiber cable according to claim 8.

According to yet another aspect of the invention there is provided a method for gathering optical fibers according to claim 9.

An advantageous effect of the invention is that the diameter of a loose tube including an optical fiber ribbon can be reduced.

WO 2013/165407 A1 describes an optical fiber cable including an optical fiber ribbon in a pipe, wherein the ribbon includes at least two optical fibers arranged side by side, and wherein at least two of the optical fibers are bonded intermittently along a length of the fibers.

WO2013/065640 A1 describes a fiber-optic cable in which colored film requiring production time is not used, and in which the desired optical units can be easily distinguished during mid-span branching. A fiber-optic cable formed by covering with a jacket an optical unit in which an intermittently fixed tape core having markings formed thereon is housed in a transparent tube, wherein the optical unit is distinguished by the particular type of markings formed on the intermittently fixed tape core.

JP 2014 211 526 A describes an intermittent adhesion type optical fiber tape that includes two sub-tapes formed by arranging four single-core coated optical fibers substantially in parallel with one another and bonding adjacent single-core coated optical fibers with first adhesion parts arranged intermittently along lengths and widths of the single-core coated optical fibers. The sub-tapes are bonded together in one body through second adhesion parts arranged intermittently along the lengths of the single-core coated optical fibers, and lengths of the single-core coated optical fibers constituting the sub-tape are set to be longer than lengths of the single-core coated optical fibers constituting the sub-tape so as to form gaps into which linear materials etc., can be inserted between the sub-tapes.

### Brief Description of Drawings

[Fig. 1] Fig. 1A is a cross-sectional view of a loose-tube-type optical fiber cable 1. Fig. 1B is a cross-sectional view of a loose tube 3.
[Fig. 2] Fig. 2 is a cross-sectional view of another loose-tube-type optical fiber cable 1.
[Fig. 3] Fig. 3A is a diagram illustrating a 12-fiber intermittently connected optical fiber ribbon 10. Fig. 3B is a cross-sectional view at a connection part 12 connecting two adjacent optical fibers 11 of the intermittently connected optical fiber ribbon 10.
[Fig. 4] Figs. 4A and 4B are diagrams respectively illustrating states in which intermittently connected optical fiber ribbons 10 are twisted.
[Fig. 5] Fig. 5A is a diagram illustrating an individual fiber separation method according to an embodiment. Fig. 5B is a diagram illustrating an individual fiber separation method according to a reference example.
[Fig. 6] Fig. 6A is a cross-sectional view of a test piece 20 for measuring peel strength. Fig. 6B is a diagram illustrating cuts formed in the test piece 20. Fig. 6C is a diagram illustrating how peel strength is measured.
[Fig. 7] Fig. 7 is a table showing relationships among peel strength, connection pitch, and individual-fiber separability.
[Fig. 8] Fig. 8 is a diagram illustrating a twisted ribbon manufacturing device 30.
[Fig. 9] Fig. 9A is a diagram illustrating a loose tube manufacturing device 40 for manufacturing a loose tube 3. Fig. 9B is a diagram illustrating an extrusion head of an extrusion device 41.

### Description of Embodiments

At least the following matters are disclosed in the following description and the drawings.

Disclosed is a loose tube including: a plurality of optical fibers; and a tube that houses the plurality of optical fibers together with a filler material, wherein: the plurality of optical fibers constitute an intermittently connected optical fiber ribbon in which connection parts each connecting adjacent ones of the optical fibers are arranged intermittently; and the intermittently connected optical fiber ribbon is arranged inside the tube in a state where the plurality of optical fibers constituting the intermittently connected optical fiber ribbon are bundled. According to this configuration, the diameter of the loose tube including an optical fiber ribbon can be reduced.

The plurality of optical fibers constituting the intermittently connected optical fiber ribbon are bundled by twisting the intermittently connected optical fiber ribbon. According to this configuration, the bundled state of the plurality of optical fibers 11 is stable and does not fall apart.

Preferably, the twisting pitch of the intermittently connected optical fiber ribbon is 50 mm or greater. According to this configuration, the connection parts can be restrained from getting destroyed.

Preferably, the intermittently connected optical fiber ribbon is constituted by at least eight optical fibers. According to this configuration, it is possible to both restrain the destruction of the connection parts and suppress an increase in the transmission loss of the optical fibers.

Preferably, the intermittently connected optical fiber ribbon is constituted by eight optical fibers; and the twisting pitch of the intermittently connected optical fiber ribbon is 400 mm or less. According to this configuration, it is possible to both restrain the destruction of the connection parts and suppress an increase in the transmission loss of the optical fibers.

Preferably, the intermittently connected optical fiber ribbon is constituted by twelve or twenty-four optical fibers; and the twisting pitch of the intermittently connected optical fiber ribbon is 500 mm or less. According to this configuration, it is possible to both restrain the destruction of the connection parts and suppress an increase in the transmission loss of the optical fibers.

The plurality of the intermittently connected optical fiber ribbons are twisted together and arranged inside the tube. According to this configuration, the diameter (pitch diameter) of the bundle of optical fibers arranged inside the loose tube can be reduced.

Preferably, the peel strength between the optical fiber and the connection part is 13.2 N/m or less. According to this configuration, the plurality of optical fibers constituting the intermittently connected optical fiber ribbon can be separated into individual optical fibers by destroying the connection parts with a cleaning sheet when wiping, with the cleaning sheet, a filler material adhering to the intermittently connected optical fiber ribbon.

Preferably, the peel strength is 3.9 N/m or greater. According to this configuration, destruction of the connection parts can be prevented when subjected to thermal load.

### {Structure of Loose-Tube-Type Optical Fiber Cable 1}

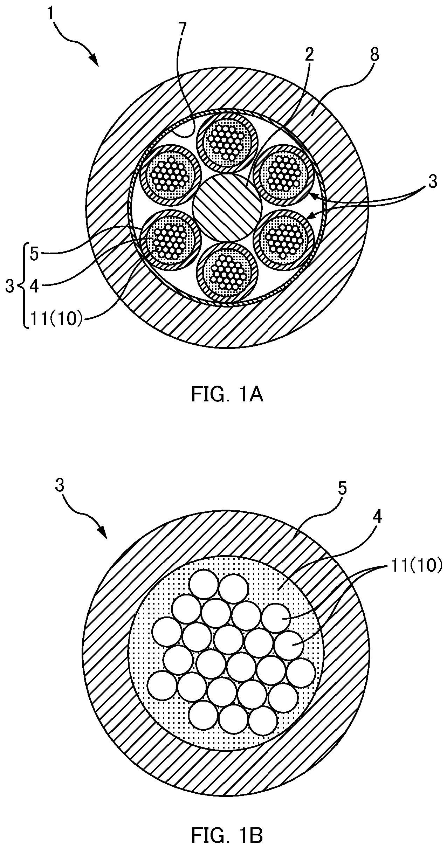

Fig. 1A is a cross-sectional view of a loose-tube-type optical fiber cable 1. As illustrated in Fig. 1A, the loose-tube-type optical fiber cable 1 includes a tension member 2 (tensile member), a plurality of loose tubes 3, and an outer sheath 8. A plurality of loose tubes 3 (six in this example) are gathered around the tension member 2. The plurality of loose tubes 3 are gathered by being twisted (wound) around the periphery of the tension member 2 either helically in one direction, or in an S-Z configuration wherein the helical direction is inverted periodically. The outer periphery of the plurality of loose tubes 3, which have been gathered around the tension member 2, is covered with a wrapping tape 7, and the outer sheath 8 is formed by extruding a sheath material around the outer periphery of the wrapping tape 7, to thereby manufacture the loose-tube-type optical fiber cable 1.

Fig. 1B is a cross-sectional view of a loose tube 3. As illustrated in Fig. 1B, the loose tube 3 includes a plurality of optical fibers 11, a gel 4, and a tube 5. For example, the loose tube 3 includes twenty-four optical fibers 11, and the twenty-four optical fibers 11 are constituted by two 12-fiber intermittently connected optical fiber ribbons 10.

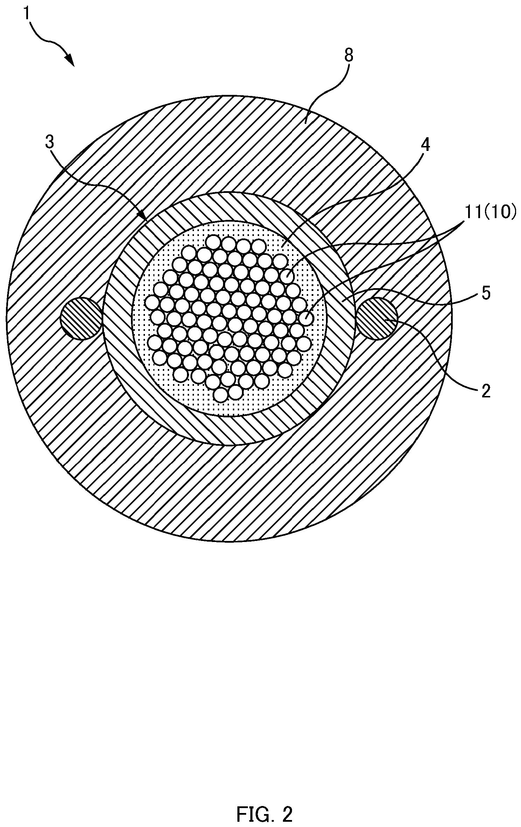

Fig. 2 is a cross-sectional view of another loose-tube-type optical fiber cable 1. This loose-tube-type optical fiber cable 1 includes two tension members 2, a loose tube 3, and an outer sheath 8, as illustrated in Fig. 2. The loose-tube-type optical fiber cable 1 illustrated in Fig. 2 is also referred to as a center loose-tube-type cable. The loose tube 3 is arranged inside the outer sheath 8 so as to be sandwiched by the two tension members 2. Also in the loose-tube-type optical fiber cable 1 of Fig. 2, the loose tube 3 includes a plurality of optical fibers 11, a gel 4, and a tube 5. The tension members 2 are arranged longitudinally along the loose tube 3, and the outer sheath 8 is formed by extruding a sheath material around the tension members 2 and the loose tube 3, to thereby manufacture the loose-tube-type optical fiber cable 1 illustrated in Fig. 2. For example, the loose tube 3 includes ninety-six optical fibers 11, which are constituted by, for example, eight 12-fiber intermittently connected optical fiber ribbons 10.

It should be noted that the loose-tube-type optical fiber cable 1 is not limited to the structures illustrated in Fig. 1A and Fig. 2, so long as it includes a loose tube 3. For example, the arrangement of the plurality of loose tubes 3 may be different, the number of loose tubes 3 may be increased/decreased, and/or the constituent elements of the loose-tube-type optical fiber cable 1 may be changed as appropriate. Note, however, that the plurality of optical fibers 11 in each loose tube 3 of the present embodiments (cf. Fig. 1B and Fig. 2) are constituted by an intermittently connected optical fiber ribbon 10.

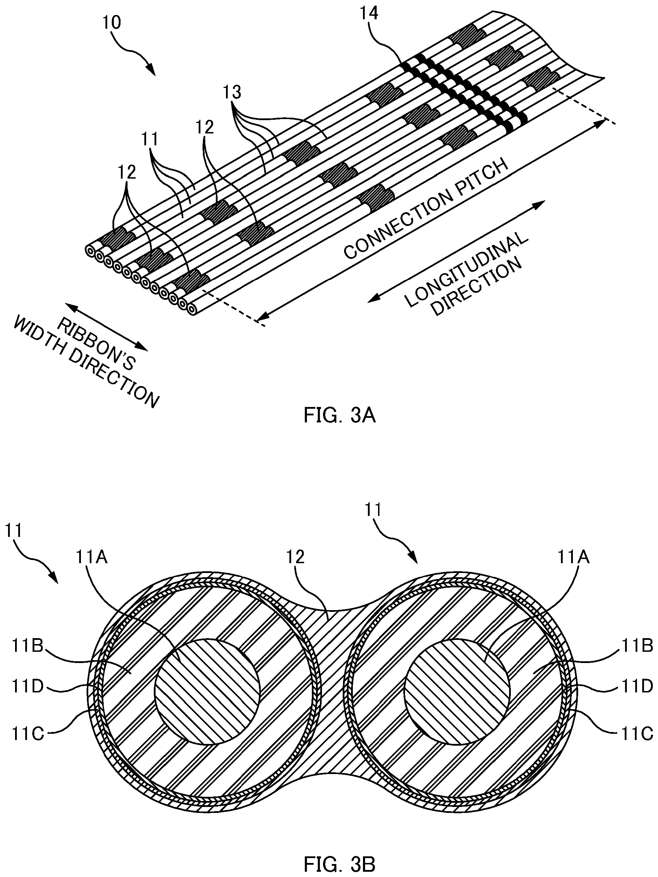

Fig. 3A is a diagram illustrating a 12-fiber intermittently connected optical fiber ribbon 10.

The intermittently connected optical fiber ribbon 10 is an optical fiber ribbon including a plurality of optical fibers 11 (twelve in this example) arranged side by side and connected intermittently. Two adjacent ones of the optical fibers 11 are connected by a connection part 12. Between two adjacent optical fibers 11, a plurality of connection parts 12 are arranged intermittently in the length direction. The plurality of connection parts 12 of the intermittently connected optical fiber ribbon 10 are arranged intermittently and two-dimensionally in the length direction and the ribbon's width direction. Regions other than the connection parts 12 between the two adjacent optical fibers 11 constitute non-connected parts 13. In the non-connected parts 13, the two adjacent optical fibers 11 are not restrained. Thus, the intermittently connected optical fiber ribbon 10 can be rolled up into a cylindrical form (a bundle form), or folded up, and the multitude of optical fibers 11 can be bundled with high density.

It should be noted that the intermittently connected optical fiber ribbon 10 is not limited to the example illustrated in Fig. 3A. For example, the arrangement of the connection parts 12 may be changed, or the number of optical fibers 11 constituting the intermittently connected optical fiber ribbon 10 may be changed. It is preferable, however, that the intermittently connected optical fiber ribbon 10 is constituted by at least eight optical fibers 11, as described further below. With such a configuration, it is possible to suppress an increase in the transmission loss of the optical fibers 11 while restraining the destruction of the connection parts 12 (described further below).

Fig. 3B is a cross-sectional view at a connection part 12 connecting two adjacent optical fibers 11 of the intermittently connected optical fiber ribbon 10.

The optical fiber 11 includes a silica glass fiber 11A, a resin cover layer 11B, and a colored layer 11C. The colored layer 11C is a coloring-agent layer for distinguishing the colors of the twelve optical fibers 11. In a section where an identification mark 14 is formed, a marking layer 11D consisting of a coating material of the identification mark 14 is formed between the resin cover layer 11B and the colored layer 11C. Herein, the marking layer 11D is formed over the entire circumference of the optical fiber 11, but it may be formed only in a portion of the circumference of the optical fiber 11.

The connection part 12 connects two adjacent optical fibers 11 by, for example, a UV-curable resin or a thermoplastic resin. The connection part 12 is formed by, for example, applying a UV-curable resin to the outer side of the colored layer 11C of each optical fiber 11, and then curing the resin by irradiation with UV rays. Herein, the resin constituting the connection part 12 is applied over the entire circumference of the optical fiber 11. Alternatively, the resin constituting the connection part 12 may be applied only to a portion of the circumference of the optical fiber 11. It should be noted that the connection parts may be formed by first applying a resin constituting the connection parts 12 along the longitudinal direction over the entire region of two adjacent optical fibers 11, curing the resin, and then making slits in regions corresponding to the non-connected parts 13 (i.e., removing the cured resin).

In the present embodiments, as illustrated in Fig. 1B and Fig. 2, by employing the characteristic of the intermittently connected optical fiber ribbon 10 that the plurality of optical fibers 11 can be gathered in a bundled form, the plurality of optical fibers 11 constituting the intermittently connected optical fiber ribbon 10 are arranged in the loose tube 3 in a bundled state. Thus, the diameter (pitch diameter) of the bundle of the plurality of optical fibers 11 arranged inside the loose tube 3 can be reduced, the multitude of optical fibers 11 can be installed inside the loose tube 3 at a high density, and the diameter of the loose tube 3 can be reduced. It should be noted that, if a commonly used optical fiber ribbon (i.e., an optical fiber ribbon in which a plurality of optical fibers arranged side by side in a row are covered all together with a resin) is arranged inside a loose tube 3, the optical fiber ribbon cannot be rolled/bundled up, thus increasing pitch diameter; this may make it likely for the wide-width optical fiber ribbon to contact a molten tube material during extrusion of the loose tube 3, while on the other hand, if the optical fiber ribbon and the molten tube material are separated from each other to prevent contact therebetween, the diameter of the loose tube 3 will increase.

Further, in the present embodiment, the plurality of optical fibers 11 constituting the intermittently connected optical fiber ribbon 10 are bundled by twisting (turning) the intermittently connected optical fiber ribbon 10. This is explained below.

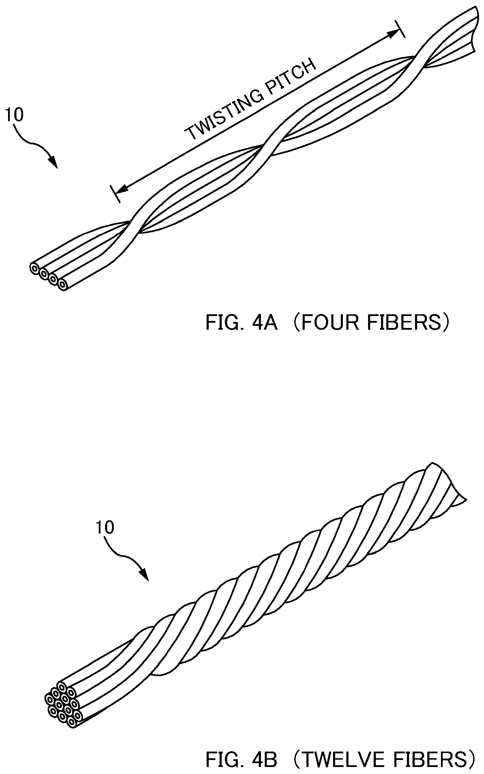

Figs. 4A and 4B are diagrams respectively illustrating states in which intermittently connected optical fiber ribbons 10 are twisted. Fig. 4A is a diagram illustrating a state in which a 4-fiber intermittently connected optical fiber ribbon 10 is twisted. Fig. 4B is a diagram illustrating a state in which a 12-fiber intermittently connected optical fiber ribbon 10 is twisted.

When the intermittently connected optical fiber ribbon 10 is twisted, a difference in tension arises between the outer-side optical fibers 11 (optical fibers 11 located at the respective ends in the ribbon's width direction) and the inner-side optical fibers 11 (optical fibers 11 located in the central section in the ribbon's width direction). The tension applied to the outer-side optical fibers 11 during twisting is greater than the tension applied to the inner-side optical fibers 11. It should be noted that, the smaller the twisting pitch of the intermittently connected optical fiber ribbon 10, the greater the difference in tension between the outer-side and inner-side optical fibers 11. Herein, "twisting pitch" refers to the length (mm), in the longitudinal direction, in which the intermittently connected optical fiber ribbon 10 is twisted once, as illustrated in Fig. 4A.

In cases where the number of fibers in the intermittently connected optical fiber ribbon 10 is small (cf. Fig. 4A), the difference in tension between the outer-side and inner-side optical fibers 11 is small, even when the intermittently connected optical fiber ribbon 10 is twisted. Thus, unless the twisting pitch is small, the plurality of optical fibers 11 will be twisted while retaining its ribbon-form. In this state, in a cross section of the intermittently connected optical fiber ribbon 10, the plurality of optical fibers 11 are still arranged side by side in a row, and the plurality of optical fibers 11 constituting the intermittently connected optical fiber ribbon 10 are not bundled.

On the other hand, in cases where the number of fibers in the intermittently connected optical fiber ribbon 10 is large (cf. Fig. 4B), the difference in tension between the outer-side and inner-side optical fibers 11 becomes large when the intermittently connected optical fiber ribbon 10 is twisted, and the outer-side optical fibers 11--which are subjected to tension--attempt to deform so as to pass along the shortest distance. The intermittently connected optical fiber ribbon 10 employed in the present embodiment (cf. Fig. 3A) includes, between the optical fibers 11, non-connected parts 13 where the optical fibers 11 are not restrained. Thus, when the outer-side optical fibers 11 attempt to deform so as to pass along the shortest distance when twisted, the plurality of optical fibers 11 constituting the intermittently connected optical fiber ribbon 10 are gathered in a bundle form, as illustrated in Fig. 4B. Thus, the diameter (pitch diameter) of the bundle of optical fibers 11 can be reduced.

When the plurality of optical fibers 11 constituting the intermittently connected optical fiber ribbon 10 are bundled by twisting the intermittently connected optical fiber ribbon 10, the bundled state of the plurality of optical fibers 11 does not fall apart and is stable inside the loose tube 3, compared to cases where the plurality of optical fibers 11 constituting the intermittently connected optical fiber ribbon 10 are bundled without twisting the intermittently connected optical fiber ribbon 10. Further, in order to stabilize the bundled state of the optical fibers 11 inside the loose tube 3, it is preferable to twist (turn) the intermittently connected optical fiber ribbon 10 in one direction. In cases where the intermittently connected optical fiber ribbon 10 is twisted by periodically inverting the twisting direction (i.e., twisted in an S-Z configuration), the bundled state of the optical fibers 11 is prone to fall apart at sections where the twisting direction is inverted. Thus, in the present embodiment, as illustrated in Fig. 4B, the intermittently connected optical fiber ribbon 10 is twisted in one direction.

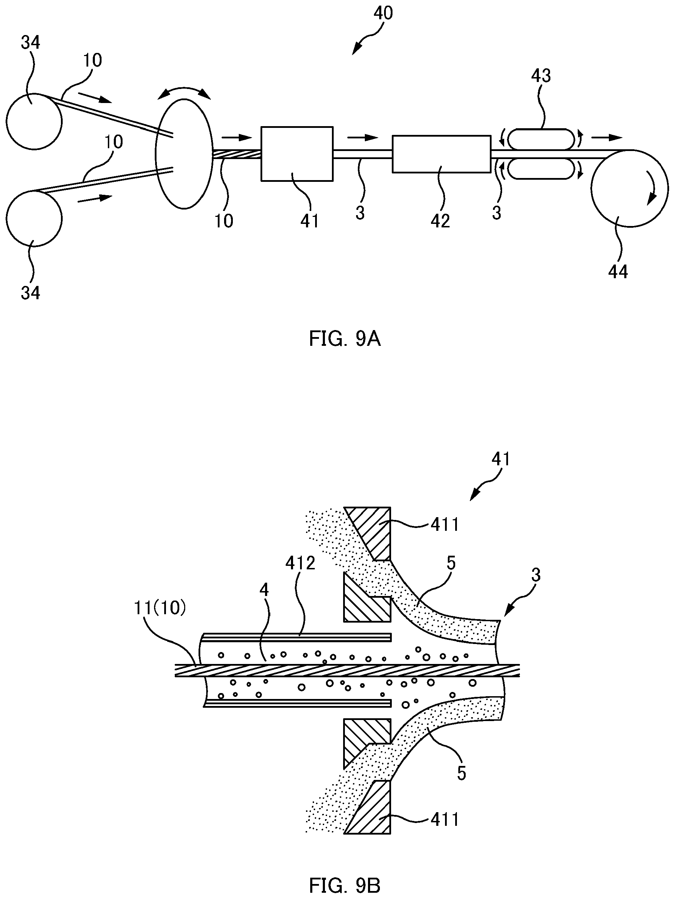

As described further below, the twisting pitch of the intermittently connected optical fiber ribbon 10 is preferably 50 mm or greater. If the twisting pitch is less than 50 mm, the twisting pitch is too small, and the connection parts 12 of the intermittently connected optical fiber ribbon 10 may get destroyed. Further, in cases where the intermittently connected optical fiber ribbon 10 includes eight optical fibers, the twisting pitch is preferably 400 mm or less. In cases where the intermittently connected optical fiber ribbon 10 includes twelve optical fibers, the twisting pitch is preferably 500 mm or less. In this way, the plurality of optical fibers 11 constituting the intermittently connected optical fiber ribbon 10 will deform into a bundle form and the diameter (pitch diameter) of the bundle of optical fibers 11 arranged inside the loose tube 3 becomes small, and thus, the optical fibers 11 are less likely to contact the molten tube material 5 during manufacturing of the loose tube 3 (cf. Fig. 9B), and an increase in transmission loss of the optical fibers 11 can be prevented.

Herein, each 12-fiber intermittently connected optical fiber ribbon 10 is twisted to thereby bundle the plurality of optical fibers 11 constituting each intermittently connected optical fiber ribbon 10, and then, the two twisted intermittently connected optical fiber ribbons 10 are twisted together into an S-Z configuration, thereby forming a bundle of twenty-four optical fibers 11 (S-Z assembly). It should be noted that the two twisted intermittently connected optical fiber ribbons 10 do not have to be gathered in an S-Z configuration, but they may be twisted together helically in one direction (one-direction assembly), or the two twisted intermittently connected optical fiber ribbons 10 may be gathered without being twisted together (straight assembly) . It is, however, preferable that the plurality of twisted intermittently connected optical fiber ribbons 10 are twisted together into an S-Z assembly or a one-direction assembly, as will be described further below. In this way, the diameter (pitch diameter) of the bundle of optical fibers 11 arranged inside the loose tube 3 can be made smaller compared to a straight assembly (described later).

The gel 4 is a filler material (resin filler material) that fills the space between the tube 5 and the plurality of optical fibers 11 (cf. Fig. 1B or Fig. 2). The interior of the tube 5 is filled with the gel 4, which is a semi-solid or fluid, and thereby, the optical fibers 11 are protected from external shock, and also, water is prevented from flowing within the tube 5. Thus, the gel 4 functions as a shock-absorbing material and a water-flow prevention material. Further, during extrusion of the loose tube 3 (cf. Fig. 9B), the optical fibers 11 are prevented from contacting the molten tube material 5 because the gel 4 is interposed between the molten tube material 5 and the intermittently connected optical fiber ribbon 10. Thus, the optical fibers 11 can be prevented from adhering to the tube 5.

The tube 5 is a resin-made circular tube that houses the plurality of optical fibers 11 and the gel 4. The tube 5 is formed by extruding, for example, polybutylene terephthalate (PBT), polypropylene (PP), or high-density polyethylene (HDPE). Extrusion of the tube 5 is described further below.

### {Method for Individually Separating Optical Fibers 11}

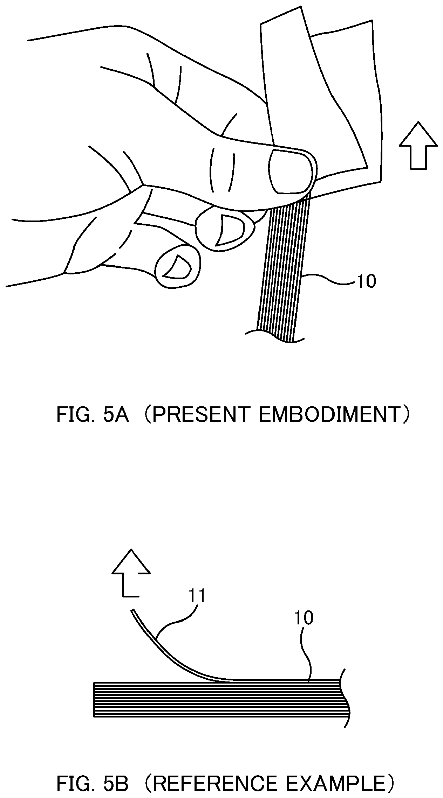

Fig. 5B is a diagram illustrating an individual fiber separation method according to a reference example. In the separation method of the reference example, each connection part 12 (cf. Figs. 3A and 3B) of the intermittently connected optical fiber ribbon 10 is torn apart, and the connected optical fibers 11 are separated into individual fibers. In the method of the reference example, it is necessary, for example, to tear apart the connection parts 12 repeatedly at the time of separating the plurality of optical fibers 11 of the intermittently connected optical fiber ribbon 10 into individual fibers. This separation task takes time. Also, at the time of tearing apart the connection parts 12 of the intermittently connected optical fiber ribbon 10, a bending force is applied to the optical fibers 11, and thus the optical fibers 11 may get damaged. Furthermore, the destroyed connection part 12 will remain on the separated optical fibers 11.

Fig. 5A is a diagram illustrating an individual fiber separation method according to the present embodiment. In the present embodiment, the intermittently connected optical fiber ribbon 10 is taken out from the loose tube 3, and then, the plurality of optical fibers 11 constituting the intermittently connected optical fiber ribbon 10 are separated into individual optical fibers by destroying the connection parts 12 (cf. Figs. 3A and 3B) with a cleaning sheet (such as wiping paper) when wiping, with the cleaning sheet, the gel 4 adhering to the intermittently connected optical fiber ribbon 10.

First, an operator opens the loose tube 3, and takes out the intermittently connected optical fiber ribbon 10. In the present embodiment, there are a plurality of intermittently connected optical fiber ribbons 10 housed inside the loose tube 3, so the operator identifies the intermittently connected optical fiber ribbon 10 to be separated on the basis of the identification mark 14 formed on each intermittently connected optical fiber ribbon 10. Since the identification mark 14 of the intermittently connected optical fiber ribbon 10 is formed in common on the plurality of optical fibers 11 (cf. Fig. 3A), the identification mark 14 is easy to visually recognize, compared to the visual recognizability of an identification mark 14 formed on an individual optical fiber 11.

After taking out, from the loose tube 3, the intermittently connected optical fiber ribbon 10 to be separated, the operator wipes off the gel 4 adhering to the periphery of the intermittently connected optical fiber ribbon 10 with a cleaning sheet. At this time, the operator first folds the sheet-form cleaning sheet. If necessary, the operator may impregnate the cleaning sheet with a liquid such as a cleaner (alcohol, etc.) . Next, the operator sandwiches the intermittently connected optical fiber ribbon 10 between the folded cleaning sheet. In the figure, the plurality of optical fibers 11 constituting the intermittently connected optical fiber 11 are sandwiched between the cleaning sheet in a state where they are arranged side by side in a row, but the optical fibers do not have to be sandwiched in this way, and the plurality of optical fibers 11 may be in a bundle form. Then, the operator pinches the intermittently connected optical fiber ribbon 10 from the thickness direction with his/her thumb and index finger through the cleaning sheet, and slides the cleaning sheet along the longitudinal direction of the intermittently connected optical fiber ribbon 10 while applying force in the thickness direction with the fingers, to wipe off the gel 4 with the cleaning sheet. At this time, the connection parts 12 of the intermittently connected optical fiber ribbon 10 are destroyed by the cleaning sheet simultaneously with the wiping of the gel 4, thereby separating the plurality of optical fibers 11 constituting the intermittently connected optical fiber ribbon 10 into individual fibers. The number of times the gel 4 is wiped with the cleaning sheet may be once or a plurality of times. In cases of wiping a plurality of times, the angle for wiping the gel 4 with the cleaning sheet may be varied. Varying the wiping angle facilitates separation into individual fibers.

With the individual fiber separation method of the present embodiment, wiping of the gel 4 can be done simultaneously with the separation, and thus, operation steps can be reduced. Further, with the method for separating optical fibers 11 according to the present embodiment, the plurality of optical fibers 11 of the intermittently connected optical fiber ribbon 10 can be separated into individual fibers in a single separation operation, and thus, the separation operation can be shortened. Furthermore, since the connection parts 12 are destroyed with a cleaning sheet, the destroyed connection parts 12 are easy to remove with the cleaning sheet, which is advantageous in that the destroyed connection parts are less likely to remain on the optical fibers 11.

Incidentally, the connection part 12 is formed on the outer side of the colored layer 11C of each optical fiber 11, as illustrated in Fig. 3B. Thus, in the individual fiber separation method of the present embodiment, the interface between the connection part 12, which is made of an adhesive, and the colored layer 11C is destroyed (interfacial failure mode) . On the other hand, in cases where the connection part 12 illustrated in Fig. 3B is destroyed by the separation method of the reference example illustrated in Fig. 5B, the connection part 12 itself, which is made of an adhesive, is destroyed (cohesive failure mode).

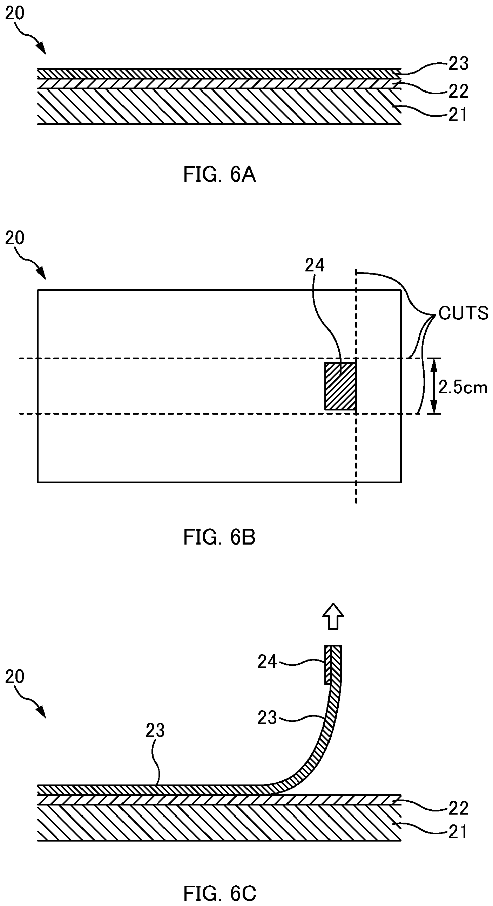

The strength against interfacial failure between the connection part 12 and the colored layer 11C (referred to hereinafter as "peel strength") is measured as follows. A test piece 20 is prepared as illustrated in Fig. 6A by: forming a colored layer 22 having a thickness from 0.01 to 0.02 mm on an acrylic plate 21 with a coloring agent constituting the colored layer 11C; then applying a UV-curable resin constituting the connection part 12 at a thickness of 0.05 mm onto the colored layer 22; and curing the UV-curable resin by irradiating the same with UV rays at an illuminance of 300 mJ, to form an adhesive layer 23. Next, as illustrated in Fig. 6B, cuts are made in the test piece 20 at a width of 2.5 cm, and a paper tape 24 is attached to the adhesive layer 23 (corresponding to the connection part 12) at an end of the 2.5-cm-wide cut. Then, as illustrated in Fig. 6C, the paper tape 24 is pulled upward, and the adhesive layer 23 is peeled slowly off from the colored layer 22. The paper tape 24 is pulled about 3 cm at a tensile speed of 50 mm/min in a tensile direction of 90°, and the peel strength (N/m) is calculated based on the measured tensile force (N) and the UV-curable resin's width (2.5 cm). It should be noted that the peel strength indicates the strength against destruction (interfacial failure) at the interface between the connection part 12 (the adhesive layer 23) and the colored layer 11C (the colored layer 22), and is thus different from the strength against destruction (cohesive failure) of the connection part 12 as illustrated in Fig. 5B.

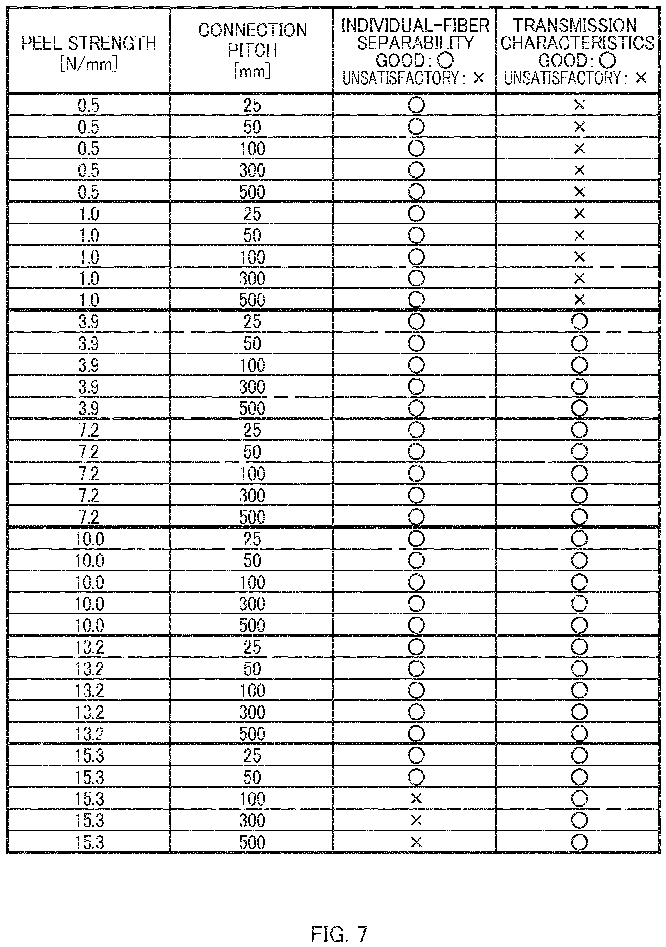

Fig. 7 is a table showing relationships among peel strength, connection pitch, and individual-fiber separability. The peel strength indicates the peel strength (N/m) measured according to Figs. 6A to C. The connection pitch is the pitch (mm) in the longitudinal direction between the connection parts 12 formed between two adjacent optical fibers 11, as illustrated in Fig. 3A. Individual-fiber separability refers to the ease of separation into individual optical fibers 11 at the time of wiping off the gel 4. In evaluating individual-fiber separability, 1 m of a terminal end of the loose-tube-type optical fiber cable 1 illustrated in Fig. 1A is opened and the intermittently connected optical fiber ribbon 10 is taken out, and the gel 4 is wiped off by sliding an alcohol-impregnated Kimwipe (registered tradename) about 20 times in the longitudinal direction against 700 mm of the extracted intermittently connected optical fiber ribbon 10. In the evaluation, the symbol "O" (good) indicates examples in which the optical fibers 11 of the intermittently connected optical fiber ribbon 10 were individually separated, and the symbol "X" (unsatisfactory) indicates examples in which the optical fibers 11 were not separated individually.

As shown by the evaluation results of individual-fiber separability in Fig. 7, in a range where the connection pitch is from 25 mm to 500 mm, when the peel strength is 13.2 N/m or less, the plurality of optical fibers 11 constituting the intermittently connected optical fiber ribbon 10 can be separated into individual optical fibers by destroying the connection parts 12 with a cleaning sheet when wiping, with the cleaning sheet, the gel 4 adhering to the intermittently connected optical fiber ribbon 10. Thus, in a range where the connection pitch of the connection parts 12 is from 25 mm to 500 mm, it is preferable that the peel strength is 13.2 N/m or less. Note that it was verified that, when the peel strength was 15.3 N/m, individual-fiber separability deteriorated when the connection pitch was long.

Further, Fig. 7 also shows evaluation results of transmission characteristics of the optical fibers 11 when the loose-tube-type optical fiber cable 1 is subjected to thermal load. Herein, the loose-tube-type optical fiber cable 1 was subjected to two repeated heat cycles between -30°C and +70°C, and the transmission loss of the optical fibers 11 was compared with the transmission loss at the initial atmospheric temperature. In the evaluation, the symbol "X" (unsatisfactory) indicates examples in which the transmission loss increased by 0.2 dB/km or more, and the symbol "O" (good) indicates examples in which the increase in transmission loss was less than 0.2 dB/km.

As shown by the evaluation results of transmission characteristics, the transmission characteristics deteriorated when the peel strength was 1.0 N/m or less. This is thought to be because, when the peel strength is 1.0 N/m or less, the connection force of the connection parts 12 is too weak, and the connection parts 12 are destroyed due to interfacial failure (peeling) between the colored layer and the connection layer when subjected to thermal load (a heat cycle), thereby causing the optical fibers 11 to meander in the interior (the space) and leading to an increase in transmission loss. On the other hand, when the peel strength was 3.9 N/m or greater, there was no deterioration in transmission characteristics. Thus, it is preferable that the peel strength is 3.9 N/m or greater.

### {Method for Manufacturing Twisted Ribbon 10}

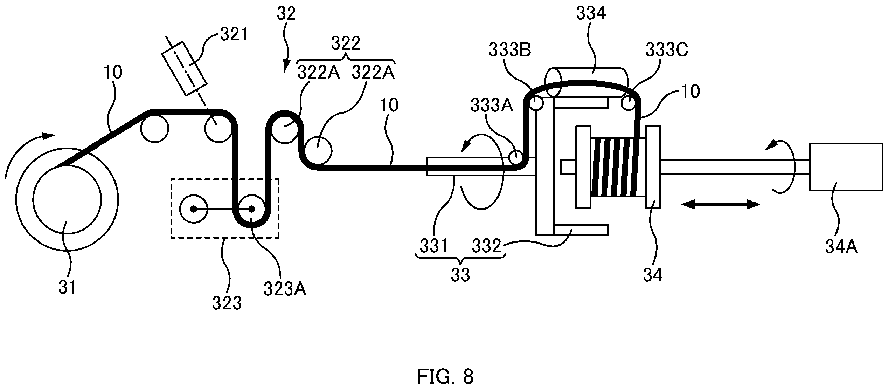

In the present embodiment, first, an intermittently connected optical fiber ribbon 10 is wound around a bobbin 34 while being twisted, to manufacture a twisted intermittently connected optical fiber ribbon 10 (twisted ribbon 10). Fig. 8 is a diagram illustrating a twisted ribbon manufacturing device 30. The twisted ribbon manufacturing device 30 includes a feed reel 31, a feeding device 32, a rotary arm 33, and a bobbin 34.

The feed reel 31 is a housing member on/in which the intermittently connected optical fiber ribbon 10 is wound and housed. The optical fiber ribbon 10 wound around the feed reel 31 is not yet twisted. The feed reel 31 is rotated by a feed motor (not illustrated). By rotating the feed reel 31, the optical fiber ribbon 10 is supplied to the feeding device 32. By controlling the rotation speed of the feed reel 31, the line speed of the optical fiber ribbon supplied to the feeding device 32 is controlled. In the present embodiment, a 12-fiber intermittently connected optical fiber ribbon 10 is supplied from the feed reel 31.

The feeding device 32 is a device that feeds the intermittently connected optical fiber ribbon 10 to the rotary arm 33. The feeding device 32 includes a line speed measurement unit 321, a tension measurement unit 322, and a tension adjustment unit 323. The line speed measurement unit 321 is a measurement unit that measures the line speed of the optical fiber ribbon 10. The line speed of the optical fiber ribbon 10 is controlled by controlling the output of the feed motor, which controls the rotation of the feed reel 31, on the basis of the measurement result of the line speed measurement unit 321. The tension measurement unit 322 is a measurement unit that measures the tension of the optical fiber ribbon 10. The tension measurement unit 322 measures the tension of the optical fiber ribbon 10 by, for example, measuring the force applied by the optical fiber ribbon 10 to the two pulleys 322A on which the optical fiber ribbon 10 is wound in an S-shape. The two pulleys 322A arranged on the downstream side of the feeding device 32 have the function of preventing the twist in the optical fiber ribbon 10 formed by the rotary arm 33 from moving toward the upstream side. The tension adjustment unit 323 is an adjustment unit that adjusts the tension of the optical fiber ribbon 10. The tension adjustment unit 323 includes a dancer roller 323A, for example. The tension of the optical fiber ribbon 10 is controlled by controlling the dancer roller 323A of the tension adjustment unit 323 on the basis of the measurement result of the tension measurement unit 322.

The rotary arm 33 is a rotary body that forms a twist in the intermittently connected optical fiber ribbon 10. The rotary arm 33 includes a base end part 331 and an arm part 332. The base end part 331 is arranged on the upstream side and is a shaft-shaped section along the rotation axis of the rotary arm 33, and is a section that feeds the optical fiber ribbon 10 to the arm part 332 while rotating. The arm part 332 is arranged downstream of the base end part 331 and is a section separated in the radial direction from the rotation axis, and is a section that feeds the optical fiber ribbon 10 to the bobbin 34 while revolving around the outer circumference of the bobbin 34. The rotary arm 33 is provided with a first pulley 333A and a second pulley 333B. The first pulley 333A is a member that changes the path of the optical fiber ribbon 10, which is fed along the rotation axis, toward the radial direction and feeds the optical fiber ribbon 10 to the second pulley 333B. The second pulley 333B is a member that feeds the optical fiber ribbon 10, which is fed from the first pulley 333A, toward the downstream end of the rotary arm 33 which revolves around the outer circumference of the bobbin 34. It should be noted that a third pulley 333C is provided to the downstream end of the rotary arm 33. The third pulley 333C is a member that revolves around the outer circumference of the bobbin 34. The third pulley 333C, however, does not have to be provided.

A slack prevention tube 334 is arranged between the second pulley 333B and the downstream end (third pulley 333C) of the rotary arm 33. The optical fiber ribbon 10 slacks (bulges) outward by centrifugal force when the rotation speed of the rotary arm 33 becomes high. By passing the optical fiber ribbon 10 through the slack prevention tube 334, slacking of the optical fiber ribbon 10 by centrifugal force is suppressed.

In contrast to the two pulleys 322A on the downstream side of the feeding device 32, the first pulley 333A and the second pulley 333B allow the twist in the intermittently connected optical fiber ribbon 10 to move toward the downstream side. Thus, after the rotary arm 33 starts rotating and a predetermined amount of twist in the optical fiber ribbon 10 is accumulated downstream of the two pulleys 322A on the downstream side of the feeding device 32, a single twist is formed in the optical fiber ribbon 10 every time the rotary arm 33 rotates once, and the twisted optical fiber ribbon 10 will be supplied to the bobbin 34. In order to allow the twist in the optical fiber ribbon 10 to move easily toward the downstream side, it is preferable that the intermittently connected optical fiber ribbon 10 in contact with the first pulley 333A and the second pulley 333B are in a folded or rounded state (a cylindrically bundled state) . In contrast, it is preferable that the intermittently connected optical fiber ribbon 10 in contact with the two pulleys 322A downstream of the feeding device 32 is in a state where the plurality of optical fibers 11 are arranged side by side in a row.

The bobbin 34 is a member around which the twisted intermittently connected optical fiber ribbon 10 (twisted ribbon 10) is wound. The bobbin 34 has a cylindrical surface on which the optical fiber ribbon 10 is wound, and is rotatable about the central axis of the cylindrical surface. The central axis of the cylindrical surface is arranged coaxially with the rotation axis of the rotary arm 33. The bobbin 34 can be rotated independently of the rotary arm 33 by a take-up motor 34A.

The bobbin 34 can also reciprocate in a direction parallel to the rotation axis. By rotating the bobbin 34 while reciprocating the same, the twisted ribbon 10 is traverse-wound around the cylindrical surface of the bobbin 34. When the take-up motor 34A rotates the bobbin 34, the bobbin 34 moves in a direction parallel to the rotation axis in association with the rotation amount of the bobbin 34. Note, however, that the motor for controlling the rotation of the bobbin 34 may be provided separately from the motor for controlling the reciprocation of the bobbin 34.

The twisted ribbon 10 supplied to the bobbin 34 is wound around the cylindrical surface of the bobbin 34 at an angular speed corresponding to the difference (angular speed difference) between the angular speed of the rotary arm 33 and the angular speed of the bobbin 34. Meanwhile, a single twist is formed in the intermittently connected optical fiber ribbon 10 every time the rotary arm 33 rotates once, and the twisted optical fiber ribbon 10 is supplied to the bobbin 34. The line speed V (m/sec) of the twisted ribbon 10 wound around the bobbin 34 corresponds to the product of the diameter D (m) at which the twisted ribbon 10 is wound around the bobbin 34 and the angular speed difference (rad/sec) between the rotary arm 33 and the bobbin 34, and substantially corresponds to the line speed of the optical fiber ribbon 10 supplied from the feed reel 31. The twisting pitch (cf. Fig. 4A) of the optical fiber ribbon 10 can be adjusted by adjusting the angular speed of the rotary arm 33 and the angular speed difference between the rotary arm 33 and the bobbin 34.

As described above, when the intermittently connected optical fiber ribbon 10 is twisted (turned) while being subjected a predetermined tension, the plurality of optical fibers 11 constituting the intermittently connected optical fiber ribbon 10 are gathered into a bundle (cf. Fig. 4B). Thus, the intermittently connected optical fiber ribbon 10 (twisted ribbon 10) is wound around the bobbin 34 in a state where the plurality of optical fibers 11 are gathered in a bundle. Stated differently, the aforementioned twisted ribbon manufacturing device 30 manufactures an intermittently connected optical fiber ribbon 10 that is twisted such that the plurality of optical fibers 11 (twelve in this example) are gathered in a bundle.

### {Method for Manufacturing Loose Tube 3}

Fig. 9A is a diagram illustrating a loose tube manufacturing device 40 for manufacturing a loose tube 3.

The loose tube manufacturing device 40 includes a bobbin 34, an extrusion device 41, a cooling device 42, a drawing machine 43, and a drum 44.

The bobbin 34 has a twisted ribbon 10 (twisted intermittently connected optical fiber ribbon 10) traverse-wound thereon. The twisted ribbon 10 is supplied from the bobbin 34 to the extrusion device 41. For example, in cases of manufacturing the loose tube 3 including twenty-four optical fibers 11 illustrated in Fig. 1B, two bobbins 34, each supplying a 12-fiber twisted ribbon 10, will be provided. If a loose tube including a plurality of optical fibers 11 separately as individual optical fibers were to be manufactured, then twenty-four bobbins each supplying an individual optical fiber will be necessary, thus resulting in an increase in size of the manufacturing facility and complication in control because the line speed etc. of each individual optical fiber needs to be controlled. In contrast, the present embodiment includes only two bobbins 34 each supplying a 12-fiber twisted ribbon 10, and thus, the manufacturing facility is simple, and also control is easy because it is only necessary to control the line speed of two twisted ribbons 10.

The two twisted ribbons supplied respectively from the two bobbins 34 are inverted periodically in the helical direction and are twisted together and gathered in an S-Z configuration (S-Z assembly), and a bundle of twenty-four optical fibers 11 is supplied to the extrusion device 41. Note, however, that the two twisted ribbons 10 do not have to be twisted together in an S-Z configuration not forming part of the invention, but are twisted together helically in a single direction (one-direction assembly), or may simply be bundled and gathered without being twisted together (straight assembly) which is not forming part of the invention. .

The extrusion device 41 is a device that extrudes the loose tube 3. Fig. 9B is a diagram illustrating an extrusion head of the extrusion device 41. The extrusion head includes a die 411 and a nipple 412. The bundle of twenty-four optical fibers 11 and the gel 4 are fed out from the nipple 412, and a molten tube material 5 is extruded from a die hole of the die 411. Thus, the plurality of optical fibers 11 and the gel 4 are introduced into an interior space of the molten tube material 5, and thus, a loose tube 3 housing therein the plurality of optical fibers 11 and the gel 4 is molded. Note that Fig. 9B illustrates bubbles in a section filled with the gel 4, but this simply illustrates the gel-filled section, and in reality, it is preferable that the gel 4 does not include any bubbles.

In the present embodiment, the plurality of optical fibers 11 constituting the intermittently connected optical fiber ribbon 10 are introduced, in a bundled state, into the interior space of the molten tube material 5. In this way, the multitude of optical fibers 11 are gathered at high density and the diameter of the bundle of optical fibers 11 can be reduced, and thus, contact between the molten tube material 5 and the intermittently connected optical fiber ribbon 10 can be prevented. Further, in the present embodiment, since the multitude of optical fibers 11 are gathered at high density and the diameter (pitch diameter) of the bundle of optical fibers 11 can be reduced, the diameter of the loose tube 3 can also be reduced.

The extruded loose tube 3 is cooled by the cooling device 42 while being drawn by the drawing machine 43, and is then taken up by the drum 44. Stated differently, a loose tube 3 (cf. Fig. 1B or Fig. 2) including the twisted intermittently connected optical fiber ribbons 10 is manufactured by the aforementioned loose tube manufacturing device 40. Then, in a cable manufacturing device, the loose tube 3 is supplied from the drum 44, and a loose-tube-type optical fiber cable 1 (cf. Fig. 1A or Fig. 2) is manufactured.

In the aforementioned loose tube manufacturing device 40, a twisted ribbon 10 that has once been taken up by the bobbin 34 is supplied to the extrusion device 41. Note, however, that a twisted intermittently connected optical fiber ribbon 10 may be supplied directly to the extrusion device 41--without taking up the ribbon--while twisting a non-twisted intermittently connected optical fiber ribbon 10.

### {Examples}

Loose-tube-type optical fiber cables each having a structure as illustrated in Fig. 2 were manufactured. Herein, various 96-fiber loose-tube-type optical fiber cables using intermittently connected optical fiber ribbons with different numbers of fibers (i.e., a 96-fiber loose-tube-type optical fiber cable constituted by twenty-four 4-fiber intermittently connected optical fiber ribbons, a 96-fiber loose-tube-type optical fiber cable constituted by twelve 8-fiber intermittently connected optical fiber ribbons, a 96-fiber loose-tube-type optical fiber cable constituted by eight 12-fiber intermittently connected optical fiber ribbons, and a 96-fiber loose-tube-type optical fiber cable constituted by four 24-fiber intermittently connected optical fiber ribbons) were manufactured.

The twisting pitch of each type of intermittently connected optical fiber ribbon was varied within the range from 30 mm to 800 mm. Here, "twisting pitch" is the length, in the longitudinal direction, in which the intermittently connected optical fiber ribbon is twisted once (cf. Fig. 3A) .

Further, three types of cables were prepared, i.e., a cable in which the plurality of twisted ribbons (twisted intermittently connected optical fiber ribbons) were twisted together in an S-Z configuration (S-Z assembly), a cable in which the twisted ribbons are twisted together helically in one direction (one-direction assembly), and a cable in which the twisted ribbons are simply gathered without being twisted together (straight assembly). In each loose-tube-type optical fiber cable, the outer diameter of the cable was 8 mm, the outer diameter of the loose tube was 5 mm, and the inner diameter of the loose tube was 4 mm.

Each manufactured loose-tube-type optical fiber cable was cut into a length of 10 m, and the optical fiber excess length rate was measured. The optical fiber excess length rate is a value (%) defined by ((L1-L2) /L2) ×100, where L1 is the natural length of the optical fiber, and L2 is the natural length of the cable.

Further, an increase in the optical fiber's transmission loss at -30°C compared to the transmission loss at an initial atmospheric temperature was measured. Transmission loss was measured at a wavelength of 1.55 µm according to an OTDR method. The transmission loss at -30°C was measured after leaving the loose-tube-type optical fiber cable in a low-temperature chamber for 12 hours. In the evaluation, the symbol "X" (unsatisfactory) indicates examples wherein the transmission loss at -30°C increased by 0.24 dB/km or more, and the symbol "O" (good) indicates examples wherein the increase in transmission loss was less than 0.24 dB/km.

Whether or not the connection parts of the twisted ribbon (twisted intermittently connected optical fiber ribbon) were destroyed was also evaluated. Herein, about 5 m of the twisted ribbon was pulled out from the cable, and whether or not the optical fibers were separated was evaluated; in the evaluation, the symbol "X" (unsatisfactory) indicates examples wherein the connection parts were destroyed and two adjacent optical fibers were separated, whereas the symbol "O" (good) indicates examples wherein the connection parts were not destroyed.

Each of the following Tables 1 to 4 shows relationships among twisting pitch, excess length rate, transmission loss, and connection part destruction. It should be noted that the value shown as the transmission loss in each table is the amount of increase in the optical fibers' transmission loss at -30°C compared to the transmission loss at an initial atmospheric temperature. Table 1 shows results for a 96-fiber loose-tube-type optical fiber cable constituted by 4-fiber intermittently connected optical fiber ribbons. Tables 2 to 4 show results for 96-fiber loose-tube-type optical fiber cables constituted by 8-fiber, 12-fiber, and 24-fiber intermittently connected optical fiber ribbons, respectively.
[Table 1]
[Table 2]
[Table 3]
[Table 4]

As shown by the evaluation results regarding the presence/absence of separation of optical fibers in Tables 1 to 4, in all the loose-tube-type optical fiber cables, when the twisting pitch was 30 mm, there were connection parts that were destroyed, and it was found that two adjacent optical fibers were separated. On the other hand, when the twisting pitch was 50 mm or greater, no destruction of connection parts was found. It was thus verified that, when the twisting pitch is too small, the connection parts are destroyed at the time of twisting or passage through a pass line during manufacturing, and thus, it is preferable that the twisting pitch is 50 mm or greater.

As shown in Tables 1 to 4, in cases where the evaluation result of transmission loss was poor, the optical fiber excess length rate was high. This is thought to be because the optical fibers contact the molten tube material during manufacturing of the loose tube and, when cooled, the tube material shrinks in a state where it is in contact with the optical fibers, thereby increasing the optical fiber excess length rate and causing the optical fibers to meander, thus resulting in an increase in transmission loss of the optical fibers.

Further, as shown in Table 2, in cases where an 8-fiber intermittently connected optical fiber ribbon was used, the transmission loss of optical fibers deteriorated when the twisting pitch was 500 mm or greater. This is thought to be because, since the twisting pitch is too large, the diameter (pitch diameter) of the bundle of optical fibers arranged inside the loose tube is not reduced sufficiently and the optical fibers come into contact with the molten tube material during manufacturing of the loose tube, thus resulting in an increase in transmission loss. On the other hand, in cases where an 8-fiber intermittently connected optical fiber ribbon was used, the transmission loss of optical fibers was satisfactory when the twisting pitch was 400 mm or less. Thus, it was verified that, in cases of using an 8-fiber intermittently connected optical fiber ribbon, it is preferable that the twisting pitch is 400 mm or less.

Similarly, as shown in Tables 3 and 4, in cases where a 12-fiber or 24-fiber intermittently connected optical fiber ribbon was used, the transmission loss of optical fibers deteriorated when the twisting pitch was 600 mm or greater. On the other hand, in cases where a 12-fiber or 24-fiber intermittently connected optical fiber ribbon was used, the transmission loss of optical fibers was satisfactory when the twisting pitch was 500 mm or less . Thus, it was verified that, in cases of using a 12-fiber or 24-fiber intermittently connected optical fiber ribbon, it is preferable that the twisting pitch is 500 mm or less.

It should be noted that, in cases of using a 4-fiber intermittently connected optical fiber ribbon, the transmission loss of optical fibers was satisfactory when the twisting pitch was 30 mm or less, as shown by the evaluation results regarding the presence/absence of separation of optical fibers in Table 1. However, at this twisting pitch, the connection parts are destroyed by twisting. Thus, in cases of manufacturing a loose tube by employing a twisted intermittently connected optical fiber ribbon, it is preferable to employ an intermittently connected optical fiber ribbon including at least eight fibers. In this way, an increase in transmission loss of the optical fibers can be suppressed while suppressing destruction of the connection parts.

As shown by the transmission loss values in Tables 1 to 4, it was verified that an increase in transmission loss can be suppressed in cases where a plurality of intermittently connected optical fiber ribbons are twisted together in an S-Z configuration or in one direction helically (in an S-Z assembly or one-direction assembly), compared to cases where the ribbons are simply gathered without being twisted together (straight assembly) . This is thought to be because, by twisting together a plurality of intermittently connected optical fiber ribbons, the diameter (pitch diameter) of the bundle of optical fibers arranged inside the loose tube can be reduced, and thus, the optical fibers are less likely to contact the molten tube material during manufacturing of the loose tube. Thus, it is preferable that the plurality of intermittently connected optical fiber ribbons inside the loose tube are twisted together.

### Reference Signs List

1: Loose-tube-type optical fiber cable;
2: Tension member;
3: Loose tube;
4: Gel;
5: Tube;
7: Wrapping tape;
8: Outer sheath;
10: Intermittently connected optical fiber ribbon;
11: Optical fiber;
11A: Silica glass fiber;
11B: Resin cover layer;
11C: Colored layer;
11D: Marking layer;
12: Connection part;
13: Non-connected part;
14: Identification mark;
20: Test piece;
21: Acrylic plate;
22: Colored layer;
23: Adhesive layer;
24: Paper tape;
30: Twisted ribbon manufacturing device;
31: Feed reel;
32: Feeding device;
321: Line speed measurement unit;
322: Tension measurement unit;
322A: Pulley;
323: Tension adjustment unit;
323A: Dancer roller;
33: Rotary arm;
331: Base end part;
332: Arm part;
333A: First pulley;
333B: Second pulley;
333C: Third pulley;
334: Slack prevention tube;
34: Bobbin;
34A: Take-up motor;
40: Loose tube manufacturing device;
41: Extrusion device;
411: Die;
412: Nipple;
42: Cooling device;
43: Drawing machine;
44: Drum.

**TABLE 1**

| 4-FIBER-STRUCTURE TWISTING PITCH [mm] | OPTICAL FIBER EXCESS LENGTH RATE [%] | TRANSMISSION LOSS [dB/KM] | | | TRANSMISSION LOSS EVALUATION | PRESENCE /ABSENCE OF SEPARATION |
|---|---|---|---|---|---|---|
| | | S-Z ASSEMBLY | ONE-DIRECTION ASSEMBLY | STRAIGHT IMPLEMENTATION | | |
| 30 | 0.39~0.40 | 0.20 | 0.19 | 0.21 | O | × |
| 50 | 0.39~0.56 | 0.38 | 0.46 | 0.50 | × | O |
| 100 | 0.38~0.72 | 0.49 | 0.50 | 0.84 | × | O |
| 200 | 0.39~0.69 | 0.56 | 0.44 | 0.74 | × | O |
| 300 | 0.39~0.72 | 0.63 | 0.77 | 1.25 | × | O |
| 400 | 0.39~0.65 | 0.83 | 0.67 | 0.95 | × | O |
| 500 | 0.39~0.70 | 0.86 | 0.90 | 1.29 | × | O |
| 600 | 0.39~0.65 | 0.74 | 0.57 | 1.11 | × | O |
| 700 | 0.39~0.80 | 1.00 | 0.75 | 1.50 | × | O |
| 800 | 0.38~0.83 | 0.89 | 0.80 | 1.34 | × | O |

**TABLE 2**

| 8-FIBER-STRUCTURE TWISTING PITCH [mm] | OPTICAL FIBER EXCESS LENGTH RATE [%] | TRANSMISSION LOSS [dB/KM] | | | TRANSMISSION LOSS EVALUATION | PRESENCE /ABSENCE OF SEPARATION |
|---|---|---|---|---|---|---|
| | | S-Z ASSEMBLY | ONE-DIRECTION ASSEMBLY | STRAIGHT IMPLEMENTATION | | |
| 30 | 0.39~0.40 | 0.20 | 0.19 | 0.21 | O | × |
| 50 | 0.39~0.41 | 0.19 | 0.19 | 0.20 | O | O |
| 100 | 0.38~0.40 | 0.20 | 0.19 | 0.20 | O | O |
| 200 | 0.39~0.41 | 0.20 | 0.19 | 0.21 | O | O |
| 300 | 0.38~0.40 | 0.20 | 0.19 | 0.20 | O | O |
| 400 | 0.38~0.40 | 0.20 | 0.19 | 0.20 | O | O |
| 500 | 0.39~0.65 | 0.63 | 0.56 | 0.84 | × | O |
| 600 | 0.39~0.70 | 0.56 | 0.65 | 0.67 | × | O |
| 700 | 0.39~0.72 | 0.82 | 0.62 | 0.88 | × | O |
| 800 | 0.38~0.70 | 0.70 | 0.61 | 0.73 | × | O |

**TABLE 3**

| 12-FIBER-STRUCTURE TWISTING PITCH [mm] | OPTICAL FIBER EXCESS LENGTH RATE [%] | TRANSMISSION LOSS [dB/KM] | | | TRANSMISSION LOSS EVALUATION | PRESENCE /ABSENCE OF SEPARATION |
|---|---|---|---|---|---|---|
| | | S-Z ASSEMBLY | ONE-DIRECTION ASSEMBLY | STRAIGHT IMPLEMENTATION | | |
| 30 | 0.39∼0.40 | 0.20 | 0.19 | 0.21 | O | × |
| 50 | 0.39~0.41 | 0.20 | 0.20 | 0.20 | O | O |
| 100 | 0.38∼0.40 | 0.20 | 0.20 | 0.20 | O | O |
| 200 | 0.39∼0.41 | 0.19 | 0.19 | 0.19 | O | O |
| 300 | 0.39∼0.41 | 0.20 | 0.20 | 0.20 | O | O |
| 400 | 0.40-0.41 | 0.19 | 0.20 | 0.21 | O | O |
| 500 | 0.40∼0.42 | 0.19 | 0.19 | 0.20 | O | O |
| 600 | 0.39∼0.65 | 0.57 | 0.65 | 0.87 | × | O |
| 700 | 0.39∼0.70 | 0.62 | 0.82 | 0.68 | × | O |
| 800 | 0.38∼0.68 | 0.70 | 0.62 | 0.75 | × | O |

**TABLE 4**

| 24-FIBER-STRUCTURE TWISTING PITCH [mm] | OPTICAL FIBER EXCESS LENGTH RATE [%] | TRANSMISSION LOSS [dB/KM] | | | TRANSMISSION LOSS EVALUATION | PRESENCE /ABSENCE OF SEPARATION |
|---|---|---|---|---|---|---|
| | | S-Z ASSEMBLY | ONE-DIRECTION ASSEMBLY | STRAIGHT IMPLEMENTATION | | |
| 30 | 0.39∼0.41 | 0.18 | 0.19 | 0.20 | O | × |
| 50 | 0.39∼0.41 | 0.19 | 0.19 | 0.20 | O | O |
| 100 | 0.38∼0.40 | 0.20 | 0.19 | 0.20 | O | O |
| 200 | 0.40∼0.41 | 0.19 | 0.19 | 0.19 | O | O |
| 300 | 0.39∼0.41 | 0.20 | 0.18 | 0.20 | O | O |
| 400 | 0.40∼0.41 | 0.19 | 0.19 | 0.19 | O | O |
| 500 | 0.41∼0.42 | 0.20 | 0.19 | 0.20 | O | O |
| 600 | 0.39∼0.56 | 0.58 | 0.70 | 0.56 | × | O |
| 700 | 0.39∼0.80 | 0.61 | 0.58 | 0.88 | × | O |
| 800 | 0.38∼0.65 | 0.65 | 0.59 | 0.98 | × | O |

## Claims

1. A loose tube (3) comprising:
a plurality of optical fibers (11), and
a tube (5) that houses the plurality of optical fibers (11) together with a filler material (4),
the plurality of optical fibers (11) constituting an intermittently connected optical fiber ribbon (10) in which connection parts (12) of which each connects adjacent ones of the optical fibers (11) are arranged intermittently,
the intermittently connected optical fiber ribbon (10) being arranged inside the tube (5) in a state where the plurality of optical fibers (11) constituting the intermittently connected optical fiber ribbon (10) are bundled, wherein
the plurality of optical fibers (11) constituting the intermittently connected optical fiber ribbon (10) are bundled by twisting the intermittently connected optical fiber ribbon (10) in one direction constituting an intermittently connected one-direction twisted optical fiber ribbon, **characterized in that** the loose tube (3) comprises two intermittently connected one-direction twisted optical fiber ribbons (10) that are twisted together helically.

2. A loose tube according to claim 1, wherein a twisting pitch of the intermittently connected optical fiber ribbon (10) is 50 mm or greater.

3. A loose tube according to claims 1 or 2, wherein the intermittently connected optical fiber ribbon (10) is constituted by at least eight optical fibers (11).

4. A loose tube according to claim 1 or 2, wherein
the intermittently connected optical fiber ribbon (10) is constituted by eight optical fibers (11), and
a twisting pitch of the intermittently connected optical fiber ribbon (10) is 400 mm or less.

5. A loose tube according to claim 1 or 2, wherein
the intermittently connected optical fiber ribbon (10) is constituted by twelve or twenty-four optical fibers; and
a twisting pitch of the intermittently connected optical fiber ribbon (10) is 500 mm or less.

6. A loose tube according to any one of claims 1 to 6, wherein a peel strength between the optical fiber (11) and the connection part is 13.2 N/m or less.

7. A loose tube according to claim 6, wherein the peel strength is 3.9 N/m or greater.

8. A loose-tube-type optical fiber cable (1) comprising:
a tension member (2);
a loose tube (3) according to claim 1; and
an outer sheath (8).

9. A method for gathering optical fibers (11), the method comprising:
a step of preparing an intermittently connected optical fiber ribbon (10) in which connection parts (12) each connecting adjacent ones of a plurality of optical fibers (11) are arranged intermittently;
a step of twisting the intermittently connected optical fiber ribbon (10) in one direction, and thereby gathering the plurality of optical fibers (11) constituting the intermittently connected optical fiber ribbon (10),
**characterized by**
a step of helically twisting two intermittently connected twisted optical fiber ribbons (10).

10. A method for manufacturing a loose tube (3), the method comprising:
a step of bundling a plurality of optical fibers (11) constituting an intermittently connected optical fiber ribbon (10) including intermittently-arranged connection parts (12), each connecting adjacent ones of the plurality of optical fibers (11), by the method for gathering optical fibers according to claim 9; and
a step of introducing the *two* twisted intermittently connected optical fiber ribbons (10) and a filler material (4) into an interior space of a molten tube material, and extruding a loose tube (3) having the plurality of optical fibers (11) and the filler material (4) housed in a tube (5).

## Patentansprüche

1. Eine Bündelader (3), umfassend:
mehrere Lichtleitfasern (11); und
ein Rohr (5), das die mehreren Lichtleitfasern (11) zusammen mit einem Füllmaterial (4) aufnimmt,
wobei die mehreren Lichtleitfasern (11) ein intermittierend verbundenes Lichtleitfaserband (10) ausbilden, in dem Verbindungsteile (12) intermittierend angeordnet sind, die jeweils angrenzende der Lichtleitfasern (11) verbinden,
wobei das intermittierend verbundene Lichtleitfaserband (10) innerhalb des Rohres (5) in einem Zustand angeordnet ist, in dem die mehreren Lichtleitfasern (11) gebündelt sind, die das intermittierend verbundene Lichtleitfaserband (10) ausbilden, wobei
die mehreren Lichtleitfasern (11), die das intermittierend verbundene Lichtleitfaserband (10) ausbilden, durch Verdrehen des intermittierend verbundenen Lichtleitfaserbandes (10) in eine Richtung gebündelt werden, das ein intermittierend verbundenes, in eine Richtung verdrehtes Lichtleitfaserband ausbildet, **dadurch gekennzeichnet, dass**
die Bündelader (3) zwei intermittierend verbundene, in eine Richtung verdrehte Lichtleitfaserbänder (10) umfasst, die spiralförmig miteinander verdreht sind.

2. Eine Bündelader nach Anspruch 1, wobei ein Verdrehungsabstand des intermittierend verbundenen Lichtleitfaserbandes (10) 50 mm oder mehr beträgt.

3. Eine Bündelader nach Anspruch 1 oder 2, wobei das intermittierend verbundene Lichtleitfaserband (10) durch wenigstens acht Lichtleitfasern (11) ausgebildet ist.

4. Eine Bündelader nach Anspruch 1 oder 2, wobei
das intermittierend verbundene Lichtleitfaserband (10) durch acht Lichtleitfasern (11) ausgebildet ist, und
ein Verdrehungsabstand des intermittierend verbundenen Lichtleitfaserbandes (10) höchstens 400 mm beträgt.

5. Eine Bündelader nach Anspruch 1 oder 2, wobei
das intermittierend verbundene Lichtleitfaserband (10) durch zwölf oder vierundzwanzig Lichtleitfasern ausgebildet ist; und
ein Verdrehungsabstand des intermittierend verbundenen Lichtleitfaserbandes (10) höchstens 500 mm beträgt.

6. Eine Bündelader nach einem der Ansprüche 1 bis 6, wobei ein Haftvermögen zwischen der Lichtleitfaser (11) und dem Verbindungsteil höchstens 13,2 N/m beträgt.

7. Eine Bündelader nach Anspruch 6, wobei das Haftvermögen 3,9 N/m oder mehr beträgt.

8. Ein Lichtleitfaserkabel (1) vom Bündeladertyp, das Folgendes umfasst:
ein Zugelement (2);
eine Bündelader (3) nach Anspruch 1; und
eine äußere Hülle (8).

9. Ein Verfahren zum Sammeln von Lichtleitfasern (11), wobei das Verfahren umfasst:
einen Schritt eines Vorbereitens eines intermittierend verbundenen Lichtleitfaserbandes (10), in dem Verbindungsteile (12) intermittierend angeordnet sind, die jeweils angrenzende von mehreren Lichtleitfasern (11) verbinden;
einen Schritt des Verdrehens des intermittierend verbundenen Lichtleitfaserbandes (10) in eine Richtung, und dadurch Sammeln der mehreren Lichtleitfasern (11), die das intermittierend verbundene Lichtleitfaserband (10) ausbilden,
**gekennzeichnet durch**
einen Schritt eines spiralförmigen Verdrehens von zwei intermittierend verbundenen verdrehten Lichtleitfaserbändern (10).

10. Ein Verfahren zum Herstellen einer Bündelader (3), wobei das Verfahren Folgendes umfasst:
einen Schritt eines Bündeins mehrerer Lichtleitfasern (11), die ein intermittierend verbundenes Lichtleitfaserband (10) ausbilden, das intermittierend angeordnete Verbindungsteile (12) beinhaltet, die jeweils angrenzende der mehreren Lichtleitfasern (11) verbinden, durch das Verfahren zum Sammeln von Lichtleitfasern nach Anspruch 9; und
einen Schritt eines Einführens der *zwei* verdrehten, intermittierend verbundenen Lichtleitfaserbänder (10) und eines Füllmaterials (4) innerhalb eines Innenraums eines geschmolzenen Rohrmaterials und Extrudieren einer Bündelader (3), die die mehreren Lichtleitfasern (11) und das Füllmaterial (4) aufweist, die in einem Rohr (5) aufgenommen sind.

## Revendications

1. Gaine intermédiaire flottante (3) comprenant :
une pluralité de fibres optiques (11) ; et
un tube (5) qui loge la pluralité de fibres optiques (11) ainsi qu'un matériau de remplissage (4),
la pluralité de fibres optiques (11) constituant un ruban de fibres optiques (10) connecté par intermittence dans lequel des parties de connexion (12) dont chacune connecte des fibres adjacentes des fibres optiques (11) sont disposées par intermittence,
le ruban de fibres optiques (10) connecté par intermittence étant disposé à l'intérieur du tube (5) dans un état où la pluralité de fibres optiques (11) constituant le ruban de fibres optiques (10) connecté par intermittence sont groupées, dans laquelle
la pluralité de fibres optiques (11) constituant le ruban de fibres optiques connecté par intermittence (10) sont groupées par torsion du ruban de fibres optiques connecté par intermittence (10) dans un sens constituant un ruban de fibres optiques torsadées dans un sens connecté par intermittence, **caractérisé en ce que**
la gaine intermédiaire flottante (3) comprend deux rubans de fibres optiques torsadées dans un sens connectés par intermittence (10) qui sont torsadés ensemble de manière hélicoïdale.

2. Gaine intermédiaire flottante selon la revendication 1, dans laquelle un pas de torsion du ruban de fibres optiques (10) connecté par intermittence est de 50 mm ou plus.

3. Gaine intermédiaire flottante selon la revendication 1 ou 2, dans laquelle le ruban de fibres optiques connecté par intermittence (10) est constitué d'au moins huit fibres optiques (11).

4. Gaine intermédiaire flottante selon la revendication 1 ou 2, dans laquelle
le ruban de fibres optiques (10) connecté par intermittence est constitué de huit fibres optiques (11), et
un pas de torsion du ruban de fibres optiques (10) connecté par intermittence est de 400 mm ou moins.

5. Gaine intermédiaire flottante selon la revendication 1 ou 2, dans laquelle
le ruban de fibres optiques (10) connecté par intermittence est constitué de douze ou vingt-quatre fibres optiques ; et
un pas de torsion du ruban de fibres optiques (10) connecté par intermittence est de 500 mm ou moins.

6. Gaine intermédiaire flottante selon l'une quelconque des revendications 1 à 6, dans laquelle une résistance au pelage entre la fibre optique (11) et la partie de connexion est de 13,2 N/m ou moins.

7. Gaine intermédiaire flottante selon la revendication 6, dans lequel la résistance au pelage est de 3,9 N/m ou plus.

8. Câble à fibres optiques de type gaine intermédiaire flottante (1) comprenant :
un élément de tension (2) ;
une gaine intermédiaire flottante (3) selon la revendication 1 ; et
une gaine extérieure (8).

9. Procédé de collecte de fibres optiques (11), le procédé comprenant :
une étape consistant à préparer un ruban de fibres optiques (10) connecté par intermittence dans lequel des parties de connexion (12) connectant chacune des fibres adjacentes d'une pluralité de fibres optiques (11) sont disposées par intermittence ;
une étape consistant à tordre le ruban de fibres optiques (10) connecté par intermittence dans un sens, et à ainsi rassembler la pluralité de fibres optiques (11) constituant le ruban de fibres optiques (10) connecté par intermittence,
**caractérisé par**
une étape consistant à tordre de manière hélicoïdale de deux rubans de fibres optiques torsadées connectés par intermittence (10).

10. Procédé de fabrication d'une gaine intermédiaire flottante (3), le procédé comprenant :
une étape consistant à grouper une pluralité de fibres optiques (11) constituant un ruban de fibres optiques (10) connecté par intermittence comportant des parties de connexion (12) disposées par intermittence, chacune connectant des parties adjacentes de la pluralité de fibres optiques (11), par le procédé destiné à rassembler des fibres optiques selon la revendication 9 ; et
une étape consistant à introduire les *deux* rubans de fibres optiques torsadées connectés par intermittence (10) et un matériau de remplissage (4) dans un espace intérieur d'un matériau de tube fondu, et d'extrusion d'une gaine intermédiaire flottante (3) ayant la pluralité de fibres optiques (11) et le matériau de remplissage (4) logés dans un tube (5).
